Europäisches Patentamt

European Patent Office

Office européen des brevets

(11) Publication number: **0 359 565**
**A2**

## EUROPEAN PATENT APPLICATION

(21) Application number: 89309342.7

(22) Date of filing: 14.09.89

(51) Int. Cl.⁵: **C 08 L 35/06**
C 08 L 67/02
//(C08L35/06,67:02,25:14),
(C08L67/02,35:06,25:14)

(30) Priority: 15.09.88 US 244963

(43) Date of publication of application:
21.03.90 Bulletin 90/12

(84) Designated Contracting States:
BE DE ES FR GB IT NL

(71) Applicant: **ARCO CHEMICAL TECHNOLOGY INC.**
**3 Christina Centre Suite 902 201 N Walnut Street**
**Wilmington Delaware 19801 (US)**

(72) Inventor: **McCready, Russell J.**
**1320 Ridgeview Circle**
**Downington, PA 19335 (US)**

(74) Representative: **Cropp, John Anthony David et al**
**MATHYS & SQUIRE 10 Fleet Street**
**London, EC4Y 1AY (GB)**

Claims for the following Contracting State: ES.

(54) **Blow moldable styrene-maleic anhydride/polybutylene terephthalate composition.**

(57) A moldable blend of styrene/maleic anhydride copolymer, polybutylene terephthalate ester, and styrene-methylmethacrylate copolymer having pendant carboxy ester groups. In one embodiment, the incorporation of the styrene-methylmethacrylate copolymer results in a composition having co-continuous phases. The compositions of this invention facilitate the production of blow molded articles.

EP 0 359 565 A2

**Description**

**BLOW MOLDABLE STYRENE-MALEIC ANHYDRIDE/POLYBUTYLENE TEREPHTHALATE COMPOSITION**

This invention relates to improved molding compositions.

In one of its more specific aspects, this invention relates to molding compositions containing a styrene-maleic anhydride copolymer, a polybutylene terephthalate ester, and a minor amount of a styrene-methylmethacrylate copolymer having pendant carboxy ester groups.

Polymer blends of styrene-maleic anhydride copolymers (S/MA) and polybutylene terephthalate esters (PBT) are known from U.S. Pat. No. 3,644,574. Also known is a polymer mixture of PBT and a rubber modified styrene-maleic anhydride copolymer. This polymer mixture is described in EPA publication No. 0 257 693. Molding compounds and films made from the polymer mixture are further described in EPA Publication Nos. 0 257 691 and 0 257 692, respectively.

U.S. Pat. No. 4,080,354 describes compositions of PBT with a second resinous component containing 1 to 40% vinyl aromatic units with the balance being non-aromatic units.

U.S. Pat. No. 4,217,427 describes PBT having incorporated thereinto pendant side chains of polystyrene to enhance its melt flow characteristics.

Notwithstanding the general knowledge that blends of S/MA and PBT are useful compositions, it is well known that their combin ation, using melt mixing in an extruder, results in molded products which delaminate due to the gross immiscibility of the polymers. This tendency to delaminate has led the molding industry to continue to seek ways to combine these polymers attempting to obtain a composition which exhibits the high heat distortion temperature of the S/MA, the excellent solvent resistance of the PBT, and resistance to delamination.

The present invention provides compositions of S/MA and PBT in which the S/MA and PBT phases are co-continuous. Scanning electron microscopy has shown the compositions of this invention to be near interpenetrating-type morphology. As used herein, the term "co-continuous" in relation to polymer blends means a distribution of two polymers in a blend such that both polymers are present as continuous phases, i.e., neither polymer is identifiable as a dispersed phase in a continuous phase of the other polymer. The term is intended to include the transition area between separate dispersed phases and co-continuous phases. The present invention also provides improved molding compositions in which the S/MA and PBT are present as separate dispersed phases or which fall within the transition area between two separate and co-continuous phases.

The compositions of this invention are achieved by the incorporation of a minor amount of a styrene-methylmethacrylate copolymer having pendant carboxy ester groups into a blend of S/MA and PBT.

Molded products prepared from the compositions of this invention exhibit excellent deflection temperature under load, flexural modulus, unnotched impact strength, solvent resistance, and resistance to delamination.

According to this invention, there is provided a composition comprising:

(a) a styrene-maleic anhydride copolymer;

(b) a polybutylene terephthalate ester; and

(c) a styrene-methylmethacrylate copolymer having pendant carboxy ester groups, wherein the weight ratio of copolymer (a) to polyester (b) is from about 10:90 to about 90:10, and the amount of copolymer (c) in parts by weight is from about 1 to about 20 per each 100 total parts by weight of (a) + (b) + (c).

Also according to this invention, there is provided a method of producing a moldable composition which comprises blending a styrene-maleic anhydride copolymer, a polybutylene terephthalate ester, and a minor amount of a styrene-methylmethacrylate copolymer having pendant carboxy ester groups.

Molded products prepared from the above-described moldable compositions are also provided by this invention. One particularly unique feature of the moldable compositions of this invention is that they can be blow molded.

In a preferred embodiment of the invention, the weight ratio of S/MA copolymer to PBT is within the range of from about 70:30 to about 30:70, and the composition exhibits co-continuous S/MA and PBT phases.

Any suitable styrene-maleic anhydride copolymer can be used. The S/MA copolymer may be impact modified typically by the incorporation thereinto of a rubber. Preferably, the S/MA copolymer will contain from about 1 to about 25 weight percent maleic anhydride with the balance being styrene. If a rubber modified S/MA is employed, the rubber content will be 2 to 20 weight percent (add on) based on the total weight of the copolymer. If an impact modified S/MA copolymer is employed in a composition according to this invention, the rubber remains finely dispersed in the S/MA phase of the composition. The number average molecular weight of the S/MA copolymer will be within the range of from about 50,000 to about 300,000. Suitable S/MA copolymers are available from ARCO Chemical Company under the trademark DYLARK.

The compositions of this invention will contain S/MA copolymer or impact modified S/MA copolymer or their mixtures in an amount within the range of from about 90 to about 10 weight percent, preferably, and in order to achieve co-continuous phases, from about 70 to about 30 weight percent, based on the total weight of the S/MA and PBT.

Any suitable PBT resin can be used. They are typically prepared by the condensation reaction of 1,4-butanediol and terephthalic acid.

The compositions of this invention will contain PBT in an amount within the range of from about 10 to about 90 weight percent, preferably, and in order to achieve co-continuous phases, from about 30 to about 70 weight percent, based on the total weight of the S/MA and the PBT.

The styrene-methylmethacrylate copolymer containing pendant carboxy ester groups can be prepared using conventional free radical solution or suspension polymerization techniques. Suitable copolymers will have number average molecular weights within the range of from about 50,000 to about 100,000 and will contain from about 1 to about 30 weight percent methylmethacrylate, preferably about 15 to about 25 weight percent methylmethacrylate. Most preferred is a copolymer containing about 20 weight percent methylmethacrylate. Examples 1 and 2 describe the preparation of styrene-methylmethacrylate copolymers suitable for use in this invention. Suitable styrene-methylmethacrylate copolymers having pendant carboxy ester groups are also available commercially from Richardson Polymer Corporation under the designation P-359 acrylic copolymer.

The styrene-methylmethacrylate copolymer containing pendant carboxy ester groups will be employed in an amount of from about 1 to about 20 parts by weight, preferably from about 8 to about 12 parts by weight, for each 100 parts by weight of total S/MA, PBT, and styrene-methylmethacrylate copolymer. The styrene-methylmethacrylate copolymer functions as an interfacial modifier between the S/MA and PBT phases.

The following examples will serve to further demonstrate the invention.

Examples 1 and 2 demonstrate the preparation of styrene-methylmethacrylate copolymer having pendant carboxy ester groups.

Examples 3-6 demonstrate the preparation of moldable compositions of this invention and their properties in molded form.

Example 7 describes the preparation of a blow molded article.

## EXAMPLE 1

This example demonstrates the preparation of a copolymer containing 16% by weight methylmethacrylate.

Styrene (200 parts) and methylmethacrylate (38 parts, 16% by weight to total monomer charged) were suspended in 360 mls. deionized water containing 0.3 part 2,2′-azobis(isobutyronitrile) free radical initiator (available commercially under the designation VAZO 64 from DuPont Company), 0.6 part sodium sulfate, and 2 parts tricalcium phosphate suspension agent. The reactor was heated to 80°C. for about 4 hours. At the conclusion of polymerization, the resultant copolymer was isolated by suction filtration, washed with dilute acid and water, and finally dried. The copolymer had Tg 102°C.

## EXAMPLE 2

This example demonstrates the preparation of a copolymer containing 22% by weight methylmethacrylate.

Styrene (200 parts) and methylmethacrylate (56.4 parts, 22% by weight to total monomer charged) were suspended in 360 mls. deionized water containing 0.3 part 2,2′-azobis(isobutyronitrile) free radical initiator (available commercially under the designation VAZO 64 from DuPont Company), 0.6 part sodium sulfate, and 2 parts tricalcium phosphate suspension agent. The reactor was heated to 80°C. for about 5 hours. At the conclusion of polymerization, the resultant copolymer was isolated by suction filtration, washed with dilute acid and water, and finally dried. The copolymer had Tg 99°C.

## EXAMPLES 3-6

The physical and solvent resistant properties obtained from a series of four molded compositions of the invention are shown in following Table I. Compositions 3, 4, and 6 contained 10 parts by weight of the styrene-methylmethacrylate copolymer containing pendant carboxy ester groups. Composition 5 contained 20 parts by weight of the styrene-methylmethacrylate copolymer.

Each of the four molding compositions was prepared by blending the designated amounts of materials in a Sterling extruder (1 in., 36:1 L/D) at a 480°F. profile (melt temperature 475°F). After extrusion, each composition was pellitized and dried at about 200°F. The pellets were molded into ASTM test samples on a Battenfeld injection molding machine at 465°F. profile and 140°F. mold temperature.

Also shown in Table I are the solvent resistance data obtained on the compositions of Example Nos. 3, 4, and 6 (Example 5 was not subjected to solvent testing).

The solvent resistance data were obtained by submersing ASTM D-368 type v tensile bars molded from each of the four compositions and the control samples in the designated solvents for three days at room temperature (25°C.). Before tensile strength testing, all submersed bars were allowed to set for one day.

TABLE I

PHYSICAL PROPERTIES AND SOLVENT RESISTANCE OF MOLDED COMPOSITIONS OF THE INVENTION (EXAMPLES 3-6)

| Example No. | Control | 3 | Control | 4 | 5 | 6 | Control |
|---|---|---|---|---|---|---|---|
| **Materials (Parts by Weight)** | | | | | | | |
| S/MA (DYLARK 332) | 100.0 | 63.0 | 50.0 | 45.0 | 40.0 | 27.0 | 0.0 |
| PBT | 0.0 | 27.0 | 50.0 | 45.0 | 40.0 | 63.0 | 100.0 |
| S/MMA Copolymer[1] | 0.0 | 10.0 | 20.0 | 10.0 | 0.0 | 10.0 | 0.0 |
| **Physical Property** | | | | | | | |
| Flex. Modulus ($\times10^3$, psi)[2] | 485 | 437 | 413 | 411 | 434 | 377 | 317 |
| Tensile Strength (psi)[3] | 8800 | 8300 | 8100 | 8400 | 9300 | 8700 | 7800 |
| Tensile Elongation (%)[3] | 2.5 | 3.3 | 3.4 | 3.7 | 4.3 | 5.3 | 309 |
| Unnotched Izod (ft-lbs/in)[4] | 1.6 | 2.3 | 3.1 | 4.8 | 4.5 | 6.1 | 32.0 |
| Deflection Temp. under Load (°F.)[5] | 218 | 207 | 211 | 205 | 195 | 190 | 130 |
| **Solvent Resistance (Tensile Strength (psi)[3]** | | | | | | | |
| **Solvent Used:** | | | | | | | |
| None (Control) | 8800 | 8300 | 8100 | 8400 | -- | 8700 | 7800 |
| Methanol | 6200 | 8388 | 6700 | 8703 | -- | 8086 | 7300 |
| Toluene | DIS[6] | DIS | 1150 | 2055 | -- | 5318 | 6850 |
| Methylene Chloride | DIS | DIS | DIS | 2981 | -- | 3148 | 8140 |

[1]Styrene-methylmethacrylate (80/20) copolymer having pendant carboxy ester group (P359 Acrylic Copolymer) Richardson Polymer Corporation.
[2]ASTM D-790
[3]ASTM D-638
[4]ASTM D-256
[5]ASTM D-648
[6]DIS = sample dissolved

EP 0 359 565 A2

The compositions of Examples 4 and 5 exhibited co-continuous morphology. The 50/50 control example, not according to the invention (i.e., it did not contain a styrene-methylmethacrylate copolymer), exhibited two distinct phases which were immiscible. Examples 3 and 6 containing 70:30 and 30:70 weight ratios of S/MA to PBT respectively exhibited substantially co-continuous phases, i.e., they fall within the transition area between separate dispersed phases and co-continuous phases.

The solvent resistance data in Table I show that the incorporation of minor amounts of a styrene-methylmethacrylate copolymer bearing pendant carboxy ester groups into a blend of S/MA and PBT serves to significantly enhance the ability of the blend to retain its tensile strength property value after being immersed in solvent. The excellent resistance to solvents possessed by the compositions of this invention is observed even with methylene chloride. No delamination of the molded compositions was observed.

## EXAMPLE 7

The composition of Example 4 was blow molded on an Impco B13 blow molding machine into a 10-inch long hourglass-shaped article having a major diameter of about 4 inches. The following blow molding conditions were used:

| | |
|---|---|
| Rear Zone Temp. (°F.) | 430 |
| Front Zone Temp. (°F.) | 420 |
| Die Head Temp. (°F.) | 435 |
| Melt Temperature (°F.) | 460 |
| Blow Time (sec.) | 40 |
| Exhaust (sec.) | 2 |
| Parison Drop Time (sec.) | 1.4 |
| Blow Pressure (psi) | 60 |

It will be evident from the foregoing that various modifications can be made to this invention. Such, however, are considered as being within the scope of the invention.

## Claims

1. A moldable composition comprising:
   (a) a styrene-maleic anhydride copolymer;
   (b) a polybutylene terephthalate ester; and
   (c) a styrene-methylmethacrylate copolymer having pendant carboxy ester groups,
   wherein the weight ratio of copolymer (a) to polyester (b) is from about 90:10 to about 10:90, and the amount of copolymer (c) in parts by weight is from about 1 to about 20 parts per each 100 parts by weight of total (a) + (b) + (c).

2. The composition of Claim 1 in which said styrene-maleic anhydride copolymer contains from about 1 to about 25 weight percent maleic anhydride.

3. The composition of Claim 1 or Claim 2 in which said styrene-methylmethacrylate copolymer having pendant carboxy ester groups contains from about 1 to about 30 weight percent methylmethacrylate.

4. The composition of any one of Claims 1 to 3 in which said weight ratio of copolymer (a) to polyester (b) is from about 70:30 to about 30:70.

5. The composition of any one of Claims 1 to 4 in which said weight ratio of copolymer (c) in parts by weight is from about 8 to about 12 per each 100 parts by weight total of (a) + (b) + (c).

6. The composition of any one of Claims 1 to 5 in which said styrene-maleic anhydride copolymer has a number average molecular weight within the range of from about 50,000 to about 300,000.

7. A moldable composition comprising:
   (a) a styrene-maleic anhydride copolymer having a number average molecular weight within the range of from about 50,000 to about 300,000;
   (b) a polybutylene terephthalate ester; and
   (c) a styrene-methylmethacrylate copolymer having pendant carboxy ester groups,
   wherein the weight ratio of copolymer (a) to polyester (b) is from about 70:30 to about 30:70, and the amount of copolymer (c) in parts by weight is from about 8 to about 12 parts per each 100 parts by weight of total (a) + (b) + (c), and wherein copolymer (a) and polyester (b) are present in the composition as co-continuous phases.

8. The composition of any one of Claims 1 to 7 in which said styrene-maleic anhydride copolymer is a rubber modified styrene-maleic anhydride copolymer.

9. A method of producing a moldable composition which comprises blending:
   (a) A styrene-maleic anhydride copolymer;

5

(b) a polybutylene terephthalate ester; and

(c) a styrene-methylmethacrylate copolymer having pendant carboxy ester groups,

wherein the weight ratio of copolymer (a) to polyester (b) is from about 90:10 to about 10:90, and the amount of copolymer (c) in parts by weight is from about 1 to about 20 parts per each 100 parts of total (a) + (b) + (c).

10. The method of Claim 9 in which said styrene-maleic anhydride is a rubber modified styrene-maleic anhydride copolymer.

11. A molded article produced by molding a composition as claimed in any one of Claims 1 to 8.

12. The molded article of Claim 11 being a blow molded article produced by blow molding said composition.

13. A molded composition comprising a first continuous phase, a second continuous phase, and an interface, wherein the first continuous phase comprises styrene-maleic anhydride copolymer, the second continuous phase comprises polybutylene terephthalate, and the interface comprises a styrene-methylmethacrylate copolymer having pendant carboxy ester groups.

14. The molded composition of Claim 13 in which said styrenemaleic anhydride is rubber modified.

15. The molded composition of Claim 13 or Claim 14 in which the weight ratio of styrene-maleic anhydride copolymer to polybutylene terephthalate is from about 70:30 to about 30:70.

16. The molded composition of any one of Claims 13 to 15 in which said interface copolymer is present in an amount of from about 1 to about 20 parts by weight per each 100 parts by weight of the total composition, including the interface copolymer.

17. The molded composition of any one of Claims 13 to 16 in which said styrene-maleic anhydride copolymer has a number average molecular weight within the range of from about 50,000 to about 300,000 and contains from about 1 to about 25 weight percent maleic anhydride.

18. The molded composition of any one of Claims 13 to 17 in which said styrene-methylmethacrylate copolymer interface contains from about 1 to about 30 weight percent methylmethacrylate.

19. The molded composition of any one of Claims 13 to 18 in which said styrene-methylmethacrylate copolymer interface contains from about 15 to about 25 weight percent methylmethacrylate.


**Claims for the following Contracting State: ES**

1. A method of producing a moldable composition which comprises blending:

(a) A styrene-maleic anhydride copolymer;

(b) a polybutylene terephthalate ester; and

(c) a styrene-methylmethacrylate copolymer having pendant carboxy ester groups,

wherein the weight ratio of copolymer (a) to polyester (b) is from about 90:10 to about 10:90, and the amount of copolymer (c) in parts by weight is from about 1 to about 20 parts per each 100 parts of total (a) + (b) + (c).

2. The method of Claim 1 in which said styrene-maleic anhydride copolymer is a rubber modified styrene-maleic anhydride copolymer.

3. The method of Claim 1 or Claim 2 in which said styrene-methylmethacrylate copolymer having pendant carboxy ester groups contains from about 1 to about 30 weight percent methylmethacrylate.

4. The method of any one of Claims 1 to 3 in which said weight ratio of copolymer (a) to polyester (b) is from about 70:30 to about 30:70.

5. The method of any one of Claims 1 to 4 in which said weight ratio of copolymer (c) in parts by weight is from about 8 to about 12 per each 100 parts by weight total of (a) + (b) + (c).

6. The method of any one of Claims 1 to 5 in which said styrene-maleic anhydride copolymer has a number average molecular weight within the range of from about 50,000 to about 300,000.

7. A method of producing a moldable composition comprising blending:

(a) a styrene-maleic anhydride copolymer having a number average molecular weight within the range of from about 50,000 to about 300,000;

(b) a polybutylene terephthalate ester; and

(c) a styrene-methylmethacrylate copolymer having pendant carboxy ester groups,

wherein the weight ratio of copolymer (a) to polyester (b) is from about 70:30 to about 30:70, and the amount of copolymer (c) in parts by weight is from about 8 to about 12 parts per each 100 parts by weight of total (a) + (b) + (c), and wherein copolymer (a) and polyester (b) are present in the composition as co-continuous phases.

8. The method of any one of Claims 1 to 7 in which said styrenemaleic anhydride copolymer is a rubber modified styrene-maleic anhydride copolymer.

9. The method of any one of Claims 1 to 8 in which said styrenemaleic anhydride is a rubber modified styrene-maleic anhydride copolymer.

10. A method of forming a molded article said method comprising molding a composition obtained by the method claimed in any one of Claims 1 to 9.

11. A method as claimed in Claim 10 comprising blow molding said composition.

12. A molded composition comprising a first continuous phase, a second continuous phase, and an interface, wherein the first continuous phase comprises styrene-maleic anhydride copolymer, the second continuous phase comprises polybutylene terephthalate, and the interface comprises a styrene-methylmethacrylate copolymer having pendant carboxy ester groups.

13. The molded composition of Claim 12 in which said styrene-maleic anhydride is rubber modified.

14. The molded composition of Claim 12 or Claim 13 in which the weight ratio of styrene-maleic anhydride copolymer to polybutylene terephthalate is from about 70:30 to about 30:70.

15. The molded composition of any one of Claims 12 to 14 in which said interface copolymer is present in an amount of from about 1 to about 20 parts by weight per each 100 parts by weight of the total composition, including the interface copolymer.

16. The molded composition of any one of Claims 12 to 15 in which said styrene-maleic anhydride copolymer has a number average molecular weight within the range of from about 50,000 to about 300,000 and contains from about 1 to about 25 weight percent maleic anhydride.

17. The molded composition of any one of Claims 12 to 16 in which said styrene-methylmethacrylate copolymer interface contains from about 1 to about 30 weight percent methylmethacrylate.

18. The molded composition of any one of Claims 12 to 17 in which said styrene-methylmethacrylate copolymer interface contains from about 15 to about 25 weight percent methylmethacrylate.